# EUROPÄISCHE PATENTANMELDUNG

(11) **EP 1 736 949 A1**
(43) Veröffentlichungstag der Anmeldung: **27.12.2006**
(21) Anmeldenummer: 06115811.9
(22) Anmeldetag: 21.06.2006
(51) Int. Cl.: G08G 1/01, G08G 1/09, H04L 29/08, H04L 29/06

(54) **Verkehrsmanagementsystem**

(30) Priorität: 23.06.2005 DE 102005029565
(71) Anmelder: SIEMENS AKTIENGESELLSCHAFT, 80333 München (DE)
(72) Erfinder: Weiss, Reinhard, 82223 Eichenau (DE)

(57) **Zusammenfassung**

Die Erfindung betrifft ein Verkehrsmanagementsystem (10) mit einem Zentralsystem (20) zur Auswertung von dezentral erfassten Verkehrsdaten, mit straßenseitig angeordneten Detektionseinrichtungen (30) zur Erfassung der Verkehrsdaten und mit Kommunikationsverbindungen (L, M) zur Datenübertragung zwischen den Detektionseinrichtungen (30L, 30M) und einem zentralenseitig angeordneten ersten Kommunikationsrechner (21). Indem eine vor System-externem Zugriff ungesicherte Kommunikationsverbindung (I) zentralenseitig an einen zweiten Kommunikationsrechner (22) angeschlossen ist, und indem der erste Kommunikationsrechner (21) und der zweite Kommunikationsrechner (22) zur gegenseitigen Datenübertragung gemäß einem vorgegebenen, proprietären Übertragungsprotokoll ausgebildet und miteinander verbunden sind, wird ein Verkehrsmanagementsystem (10) bereitgestellt, dessen sensible zentralenseitige Zone vor externen Zugriffen geschützt ist.

## Beschreibung

Der Verkehr soll möglichst ungehindert fließen, der Verkehrsraum optimal genutzt und unnötige Verkehrsbelastungen vermieden werden. Hierzu werden Informationen aus einzelnen Verkehrssystemen für den Straßenverkehr innerorts und auf Autobahnen, für den Parkverkehr und für den öffentlichen Nahverkehr in einem zentralen Verkehrsmanagementsystem zusammengeführt und, geeignet aufbereitet, den Verkehrsteilnehmern, den Verkehrssteuerungssystemen und Verkehrsplanern verfügbar gemacht.

Aus der DE-Produktschrift "SITRAFFIC CONCERT - die Verkehrsmanagementzentrale", herausgegeben von Siemens AG, Bestell-Nr. A24705-X-A357-*-04, Ausgabe 001, 2002-03-01, ist eine Verkehrsmanagementzentrale bekannt, an die unter anderen Verkehrssystemen ein Verkehrsrechner zur Steuerung des Verkehrs und Detektoren zur Erfassung von Verkehrsdaten angebunden werden können. Mit der Möglichkeit, Detektoren direkt anzuschließen, können Verkehrsdaten unabhängig von zufällig vorhandener Infrastruktur an allen verkehrlich wichtigen Stellen erfasst werden.

Die DE-Produktschrift "TRAFFIC EYE Universal - Schnelle Verkehrslageerfassung", herausgegeben von Siemens AG, Bestell-Nr. E10003-A800-W22, Ausgabe 001, 2002-06-02, offenbart ein auf passiven Infrarot-Sensoren basierendes Erfassungssystem für Verkehrsdaten, wie zum Beispiel Verkehrsstärke, Geschwindigkeit und Belegungsgrad. Die Stromspeisung des autarken Systems erfolgt über ein Solarpaneel, gepuffert über eine Batterie. Damit ist eine einfache Installation an fast allen Standorten gewährleistet. Je nach Einstellung werden nur die aktuell erfassten Verkehrsdaten an die Verkehrsmanagementzentrale übertragen oder alle seit der letzten Übertragung angefallenen Daten hinzugefügt. Neben der Einstellung des Meldeverhaltens lässt sich die komplette Steuerung des Erfassungssystems direkt von der Zentrale des Verkehrsmanagementsystems aus durchführen. Es lassen sich Verkehrsdaten manuell anfordern, aber auch Statusabfragen und Downloads von Software durchführen.

Zur Datenübertragung zwischen einem als straßenseitige Detektionseinrichtung ausgebildeten Erfassungssystem und einem zentralenseitig angeordneten Kommunikationsrechner stehen Kommunikationsverbindungen mit Schnittstelleneinrichtungen zur Verfügung. Wenn nun als Kommunikationsverbindung beispielsweise eine Verbindung über das Internet verwendet werden soll, so besteht für einen externen Angreifer die Möglichkeit, über das Internet in das sensible Zentralsystem einzudringen. Dies ist zu unterbinden und es ist einem Betreiber eines Verkehrsmanagementsystems auch nachzuweisen, dass ein System-externer Zugriff auf den zentralen Bereich der Weiterverarbeitung übertragener Verkehrsdaten und der Steuerung der angeschlossenen Verkehrssysteme nicht möglich ist.

Als Zugangsschutzsystem zur Trennung von Netzbereichen eines Rechnernetzes sind sogenannte Firewalls bekannt. Diese sitzen an den Schnittstellen zwischen einzelnen Netzen, etwa zwischen einem LAN (engl. Local Area Network) und dem Internet, und kontrollieren den Datenverkehr zwischen diesen Netzen, um ungewünschten Verkehr zu verhindern und nur gewünschten Verkehr weiterzuleiten. Man unterscheidet dabei drei Netzwerkzonen, nämlich das externe Netz (WAN, Intenet), die demilitarisierte Zone (kurz DMZ) mit von extern erreichbaren Servern, und das interne Netz (LAN). Als Software-Komponenten einer Firewall kennt man Paketfilter, Content-Filter, Proxy, und dergleichen. Firewalls sind mitunter schwer zu konfigurieren, weisen Schwachstellen und Probleme mit unerkannten Fehlern auf, und sind kostspielig. Sie haben unerwünschte Einflüsse auf die Handhabbarkeit des Systems und bieten insgesamt auch nur eine begrenzte Sicherheit.

Der Erfindung liegt daher die Aufgabe zugrunde ein Verkehrsmanagementsystem der eingangs genannten Art bereitzustellen, dessen sensible Zone im Zentralsystem auf alternative Weise gegen System-externen Zugriff über eine ungesicherte Kommunikationsverbindung gesichert ist.

Die Aufgabe wird gelöst durch ein gattungsgemäßes Verkehrsmanagementsystem, bei dem eine vor System-externem Zugriff ungesicherte Kommunikationsverbindung zentralenseitig an einen zweiten Kommunikationsrechner angeschlossen ist, und bei dem der erste Kommunikationsrechner und der zweite Kommunikationsrechner zur gegenseitigen Datenübertragung gemäß einem vorgegebenen, proprietären Übertragungsprotokoll ausgebildet und miteinander verbunden sind. Der Erfindung liegt der Gedanke zugrunde, dass eine Abschottung zwischen zwei Systemen für Angreifer dann am effektivsten ist, wenn die Art und Anzahl der zwischen der Detektionseinrichtung und dem Zentralsystem ausgetauschten Informationen auf vorbestimmte Funktionen beschränkt ist.

In einer bevorzugten Ausgestaltung des erfindungsgemäßen Verkehrsmanagementsystems sind der erste Kommunikationsrechner und der zweite Kommunikationsrechner über eine Datenleitung miteinander verbunden. Die Möglichkeiten und Risiken für den Betreiber eines Verkehrsmanagementsystems sind bei der Datenübertragung über einer simple Signalleitung viel geringer als bei einer Kopplung über ein lokales Netzwerk unter Verwendung der Internetprotokollfamilie TCP/IP.

Vorzugsweise sind der erste Kommunikationsrechner und der zweite Kommunikationsrechner zur seriellen Datenübertragung über die Datenleitung ausgebildet. Als Kopplung kann daher eine standardmäßige serielle Übertragung mit den COM-Schnittstellen der beiden Kommunikationsrechner vorgenommen werden.

In einer vorteilhaften Ausführungsform des erfindungsgemäßen Verkehrsmanagementsystems ist eine vor System-externem Zugriff auf das Zentralsystem gesicherte Kommunikationsverbindung als Leitungsverbindung oder als Mobilfunkverbindung ausgebildet und direkt an den ersten Kommunikationsrechner angeschlossen. Unter einem System-externen Zugriff auf das Zentralsystem wird hier ein Angriff über eine Kommunikationsverbindung verstanden, der innerhalb des Zentralsystems Manipulationen - etwa in Form von Datenabfragen oder Softwareveränderungen - erzielt. Damit können an das Verkehrsmanagementsystem auch straßenseitige Detektionseinrichtungen angeschlossen werden, die über eine Mobilfunkschnittstelle beispielsweise eines GSM-Netztes oder über ein Kabelmodem mit der Zentrale verbunden werden.

In einer bevorzugten Ausführungsform des erfindungsgemäßen Verkehrsmanagementsystems ist die Datenkommunikation zwischen dem ersten Kommunikationsrechner und dem zweiten Kommunikationsrechner als eine Master-Slave-Kommunikation ausgebildet, wobei der Master durch den ersten Kommunikationsrechner und der Slave durch den zweiten Kommunikationsrechner gebildet ist. Der Master fragt mit vorgegebenen Befehlen die Werte aus dem Slave ab, während der Slave nur mit vorgegebenen Datenstrukturen antwortet. Umgekehrt kann auch der Master Daten oder Anfragen zum Slave für die angeschlossenen Detektionseinrichtungen senden.

In einer vorteilhaften Ausgestaltung des erfindungsgemäßen Verkehrsmanagementsystems ist die Schnittstelle des zweiten Kommunikationsrechners zum ersten Kommunikationsrechner als eine Schnittstelle einer als Leitungsverbindung ausgebildeten Kommunikationsverbindung zum ersten Kommunikationsrechner emulierend ausgebildet. Damit ist es für den ersten Kommunikationsrechner gleichgültig und ohne Einfluss, ob eine Detektionseinrichtung mit Leitungsverbindung über ein Kabelmodem oder ob eine Detektionseinrichtung über das Internet und GPRS-Server angeschlossen ist. Die Schnittstelle ist also universell für verschiedene Detektionseinrichtungen gleichermaßen geeignet.

In einer weiteren bevorzugten Ausgestaltung des erfindungsgemäßen Verkehrsmanagementsystems sind der erste Kommunikationsrechner, ein zentraler Verkehrsrechner, ein Detektorzentralrechner und ein Anwendungszentralrechner über Schaltmittel zu einem lokalen Netzwerk verbunden. Der erste Kommunikationsrechner führt die Kommunikation auf niedrigster Ebene mit Protokollen für Modems etc. aus. Der Detektorzentralrechner dient dem Empfang und der Verwaltung der von den Detektionseinrichtungen empfangenen Rohdaten. Der Anwendungszentralrechner führt Plausibilitätskontrollen durch, bildet gegebenenfalls Ersatzwerte, verarbeitet die Rohdaten weiter und ist für die Archivierung der Verkehrsdaten zuständig, während dem Verkehrszentralrechner die Steuerung angeschlossener Lichtsignalanlagen obliegt.

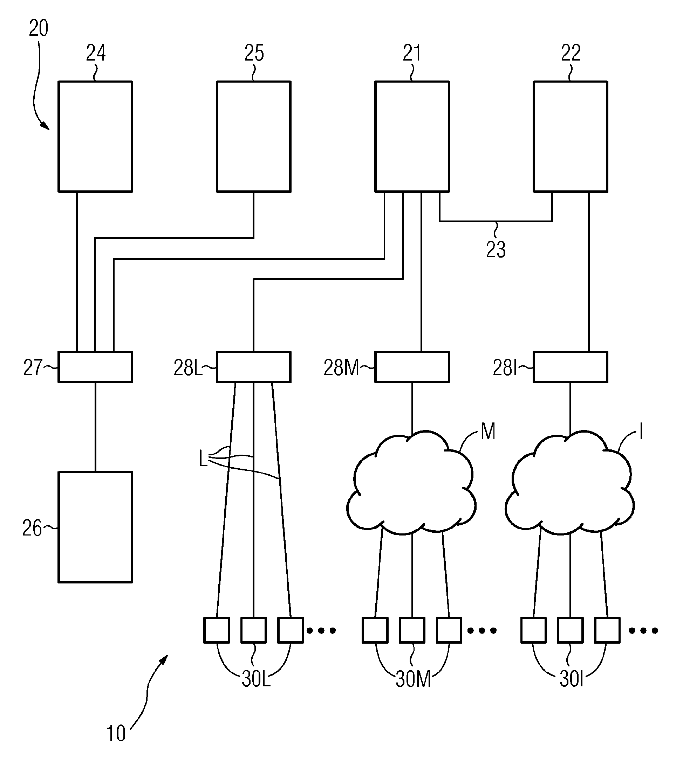

Weitere Vorteile des erfindungsgemäßen Verkehrsmanagementsystems ergeben sich aus einem Ausführungsbeispiel, welches nachfolgend anhand der Zeichnung näher erläutert wird, in deren einziger Figur eine Anschaltungsübersicht des Verkehrsmanagementsystems schematisch veranschaulicht ist.

Gemäß der einzigen Figur weist ein erfindungsgemäßes Verkehrsmanagementsystem 10 ein Zentralsystem 20 sowie straßenseitig verteilt angeordnete und an sich bekannte Detektionseinrichtungen 30 zur dezentralen Erfassung von Verkehrsdaten auf. Das Zentralsystem 20 umfasst insbesondere einen ersten Kommunikationsrechner 21, einen Detektorzentralrechner 24, einen Anwendungszentralrechner 25 und einen Verkehrszentralrechner 26, die als Hosts entsprechender Server dienen und über als Switch ausgebildete Schaltmittel 27 verbunden ein lokales Netzwerk (LAN) bilden. Weitere tragende Elemente des LAN, wie Repeater, Hubs, oder Bridges sind nicht dargestellt. Der Aufbau des LAN kann beispielsweise über den Ethernet-Standard über Twisted-Pair-Kabel erfolgen.

An den ersten Kommunikationsrechner 21 sind in einer vor System-externem Zugriff gesicherten Weise Detektionseinrichtungen 30L über eine Leitungsverbindung L und ein Kabelmodem 28L sowie Detektionseinrichtungen 30M über ein drahtloses Kommunikationsnetz M und ein Funkmodem 28M angeschlossen. Im vorliegenden Ausführungsbeispiel sind aber außerdem Detektionseinrichtungen 301 über eine vor System-externem Zugriff ungesicherte Kommunikationsverbindung I, etwa dem Internet, und ein DSL-Modem als Schnittstelle 281 mit dem Zentralsystem 20 verbunden. Die Kommunikation erfolgt dabei beispielsweise über den allgemeinen paketorientierten Funkdienst GPRS (engl. General Packet Radio Service), der eine Erweiterung des GSM-Mobilfunk-Standards um paketorientierte Datenübertragung ist. Bei GPRS werden die Daten beim Sender in einzelne Pakete umgewandelt, als solche übertragen und beim Empfänger wieder zusammengesetzt. Dies ermöglicht eine höhere Datenrate und es braucht kein Funkkanal für einen Benutzer dauerhaft reserviert zu werden.

Die Datenübertragung über das Internet I, auf das Zugriff über einen Schmalband-Zugang (Modem, ISDN), über einen Breitband-Zugang (DSL, Kabelmodem) oder über eine Standleitung erfolgen kann, fußt auf der einheitlichen Internet-Protokoll-Familie TCP/IP, welche die Adressierung und den Datenaustausch zwischen verschiedenen Computern und Netzwerken standardisiert. Allerdings ist es für System-externe Angreifer möglich, über das Internet I Zugriff auf den sensiblen Bereich des Zentralsystems 20 zu erhalten, wenn keine Vorkehrungen getroffen werden.

In Abkehr von oder zusätzlich zu Firewalls wird als Zugangsschutzsystem erfindungsgemäß vorgeschlagen, dass die vor System-externem Zugriff ungesicherte Kommunikationsverbindung I zentralenseitig an einen zweiten Kommunikationsrechner 22 angeschlossen ist, der als so genannte demilitarisierte Zone und Host für den GPRS-Server dient. Der erste Kommunikationsrechner 21 und der zweite Kommunikationsrechner 22 sind über eine serielle Datenleitung 23 miteinander verbunden. Zur Kopplung dient eine standardmäßige EIA-232-Schnittstelle (e-hem. RS-232), wobei es sich um eine Spannungsschnittstelle handelt, d.h. die Informationen werden durch verschiedene Spannungspegel dargestellt. Bei der seriellen Datenübertragung werden die Bits hintereinander auf der Leitung übertragen. Als Steckverbindung werden vorzugsweise 9-polige Sub-D-Stecker und -Buchsen eingesetzt. Pro übertragenem Datensatz (Byte) wird die Übertragung mit einem Startbit eingeleitet, darauf folgen 5 bis 8 Datenbits, wahlweise ein Parity- oder Prüfbit und schließlich ein oder zwei Stoppbits.

Die Datenübertragung erfolgt gemäß einem vorgegebenen, proprietären Übertragungsprotokoll. Hierdurch ist der sensible Auswertungs- und Steuerungsteil des Zentralsystems 20 mit dem ersten Kommunikationsrechner 21 vom als unsensibles Frontsystem ausgebildeten zweiten Kommunikationsrechner 21 durch die Einschränkung der Art und Anzahl von übertragenen Informationen auf bestimmte Funktionen effektiv abgeschottet. Während das Frontsystem zum Internet I nur Teilaufgaben hat und im wesentlichen der Datenerfassung dient - wofür eine übliche Firewall ausreichend ist -, muss das Backsystem wegen der sehr sensiblen Sicherheitsanforderungen und der Verkehrsnetzübergreifenden Funktion besonders geschützt sein. Dies kann einem Betreiber eines erfindungsgemäßen Verkehrsmanagementsystems auch leicht bewiesen werden.

Ein Feldbus mit proprietärem Übertragungsprotokoll, mit dessen Hilfe die Kommunikationsrechner 21 und 22 verbunden sind, verwendet die Formatklasse FT1.2 gemäß IEC 870-5-1 mit den Eigenschaften Hammingdistanz 4, asynchron und byteorientiert. Es wird nur die unsymmetrische Übertragungsprozedur zugelassen. Alle Daten sind binär codiert. Abweichend von IEC 870-5-1 werden zwei Typen von Langtelegrammen definiert. Es gelten folgende Übertragungsregeln: Der Ruhezustand auf der Leitung entspricht dem 1-Signal. Jedes Zeichen hat ein Startbit (0-Signal), acht Informationsbits, ein gerades Paritätsbit und ein Stoppbit (1-Signal). Die Übertragungsrate ist frei wählbar. Zwischen den Zeichen eines Telegramms sind keine Ruhezustände zugelassen. Die Reihenfolge der Anwenderdatenzeichen wird durch eine modulo 256 Prüfsumme (CS) abgeschlossen. Der Empfänger prüft pro Zeichen das Startbit, das Stoppbit und die gerade Parität, pro Telegramm das festgelegte Startzeichen am Anfang und am Ende des Telegrammkopfes, bei Typ1 die Gleichheit der zwei Längenangaben, ob die Anzahl der empfangenen Zeichen gleich der Länge +6 ist, die Telegramm-Prüfsumme und das Endzeichen. Ergibt eine dieser Prüfungen ein negatives Ergebnis, so ist das Telegramm zu verwerfen. Nach einem empfangenen Telegramm darf frühestens nach einer Ruhezeit geantwortet werden, die abhängig von der Busbeschaffenheit ist. Beim Telegrammaufbau werden vier Telegrammtypen unterschieden: ein Langtelegramm Typ1, ein Langtelegramm Typ2, ein Kurztelegramm und ein Quittungszeichen. Beim Telegrammablauf kann abweichend von IEC 870-5-1 auf ein Langtelegramm, welches die Primary and die Secondary sendet (Funktionscode 3), auch ein Langtelegramm (nur erlaubt wenn Antwortdaten vom Typ1 sind) von der Secondary als Antwort kommen (Send/Respond). Dies verringert bei einem hohen Datenverkehr das wiederholte Polling.

Die Datenkommunikation zwischen dem ersten Kommunikationsrechner 21 und dem zweiten Kommunikationsrechner 22 ist als Master-Slave-Kommunikation ausgebildet. Der Slave wird durch den zweiten Kommunikationsrechner 22, der Master durch den ersten Kommunikationsrechner 21 gebildet. Der Master fragt mit vorgegebenen Befehlen die Werte aus dem Slave ab, der Slave antwortet nur mit vorgegebenen Datenstrukturen. Umgekehrt kann auch der Master Daten oder Anfragen zum Slave für die angeschlossenen Detektionseinrichtungen 301 senden.

Die Schnittstelle des zweiten Kommunikationsrechners 22 zum ersten Kommunikationsrechner 21 ist so konzipiert, dass sich der zweite Kommunikationsrechner 22 gegenüber dem ersten Kommunikationsrechner 21 so verhält, wie die Kommunikationsverbindung L über das Kabelmodem 28L zur Detektionseinrichtung 30L, das heißt, sie emuliert das Verhalten des Kabelmodems 28L. Daher ist es für den ersten Kommunikationsrechner 21 gleichgültig und ohne Einfluss, ob eine Detektionseinrichtung 30L mit Kabelmodem 28L oder eine Detektionseinrichtung 301 mit Internet-Modem 281 und zweitem Kommunikationsrechner 22 angeschlossen wird.

Diese Architektur ist auf beliebige Systeme übertragbar, die lediglich Daten miteinander austauschen müssen. Mit Vorteil kann auf eine Netzwerkkarte in den Rechnern für diese Verbindung verzichtet werden.

## Patentansprüche

1. Verkehrsmanagementsystem (10) mit einem Zentralsystem (20) zur Auswertung von dezentral erfassten Verkehrsdaten, mit straßenseitig angeordneten Detektionseinrichtungen (30) zur Erfassung der Verkehrsdaten und mit Kommunikationsverbindungen (L, M) zur Datenübertragung zwischen den Detektionseinrichtungen (30L, 30M) und einem zentralenseitig angeordneten ersten Kommunikationsrechner (21),
**dadurch gekennzeichnet, dass** eine vor System-externem Zugriff ungesicherte Kommunikationsverbindung (I) zentralenseitig an einen zweiten Kommunikationsrechner (22) angeschlossen ist, und dass der erste Kommunikationsrechner (21) und der zweite Kommunikationsrechner (22) zur gegenseitigen Datenübertragung gemäß einem vorgegebenen, proprietären Übertragungsprotokoll ausgebildet und miteinander verbunden sind.

2. Verkehrsmanagementsystem nach Anspruch 1,
**dadurch gekennzeichnet, dass** der erste Kommunikationsrechner (21) und der zweite Kommunikationsrechner (22) über eine Datenleitung (23) miteinander verbunden sind.

3. Verkehrsmanagementsystem nach Anspruch 2,
**dadurch gekennzeichnet, dass** der erste Kommunikationsrechner (21) und der zweite Kommunikationsrechner (22) zur seriellen Datenübertragung über die Datenleitung (23) ausgebildet sind.

4. Verkehrsmanagementsystem nach einem der Ansprüche 1 bis 3,
**dadurch gekennzeichnet, dass** eine vor System-externem Zugriff gesicherte Kommunikationsverbindung als Leitungsverbindung (L) oder als Mobilfunkverbindung (M) ausgebildet und direkt an den ersten Kommunikationsrechner (21) angeschlossen ist.

5. Verkehrsmanagementsystem nach einem der Ansprüche 1 bis 4,
**dadurch gekennzeichnet, dass** die Datenkommunikation zwischen dem ersten Kommunikationsrechner (21) und dem zweiten Kommunikationsrechner (22) als eine Master-Slave-Kommunikation ausgebildet ist, wobei der Master durch den ersten Kommunikationsrechner (21) und der Slave durch den zweiten Kommunikationsrechner (22) gebildet ist.

6. Verkehrsmanagementsystem nach einem der Ansprüche 1 bis 5,
**dadurch gekennzeichnet, dass** die Schnittstelle des zweiten Kommunikationsrechners (22) zum ersten Kommunikationsrechner (21) als eine Schnittstelle der als Leitungsverbindung (L) ausgebildeten Kommunikationsverbindung zum ersten Kommunikationsrechner (21) emulierend ausgebildet ist.

7. Verkehrsmanagementsystem nach einem der Ansprüche 1 bis 6,
**dadurch gekennzeichnet, dass** der erste Kommunikationsrechner (21), ein Verkehrszentralrechner (26), ein Detektorzentralrechner (24) und ein Anwendungszentralrechner (25) über Schaltmittel (27) zu einem lokalen Netzwerk verbunden sind.
